(19) Europäisches Patentamt
European Patent Office
Office européen des brevets

(11) Publication number: **0 469 684 A1**

(12) **EUROPEAN PATENT APPLICATION**

(21) Application number: **91201973.4**

(22) Date of filing: **29.07.91**

(51) Int. Cl.[5]: **C08G 73/12**, C08F 222/40, C07C 43/215

(30) Priority: **30.07.90 DE 4024193**

(43) Date of publication of application: **05.02.92 Patentblatt 92/06**

(84) Designated Contracting States: **DE FR GB IT**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Stenzenberger, Horst**
**c/o Technochemie GmbH Verfahrenstechnik**
**Gutenbergstrasse 2, W-6915**
**Dossenheim(DE)**
Inventor: **Koenig, Peter**
**c/o Technochemie GmbH Verfahrenstechnik**
**Gutenbergstrasse 2, W-6915**
**Dossenheim(DE)**

(54) **Polyimide compositions**

(57) Curable compositions which comprise:
a) polyimides of the general formula (I)

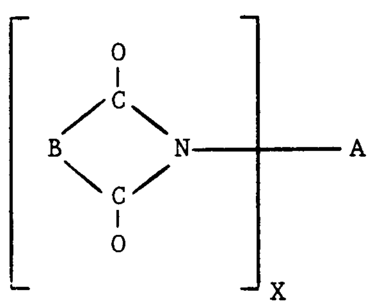

(I)

wherein B signifies a bivalent radical containing a carbon-carbon double bond, and wherein A represents an X-valent radical, but at least a bivalent radical; and
b) alkenylphenoxyalkanes of the general formula (II)

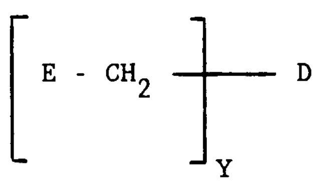

(II)

wherein D represents a Y-valent radical, Y is 1,2 or 3 and wherein E signifies a radical of the following formulae

EP 0 469 684 A1

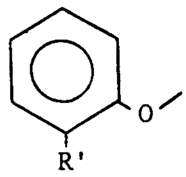
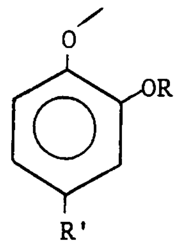

wherein R represents an alkyl group with 1 to 6 carbon atoms and R' a 1,2 or 2,3 alkenyl group with 3 to 8 carbon atoms.

The invention relates to curable compositions comprising polyimides of the general formula (I)

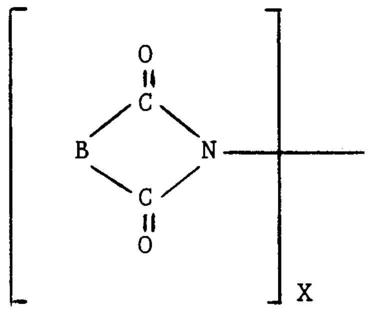

(I)

wherein B signifies a bivalent radical containing a carbon-carbon double bond, and wherein A represents an X-valent radical, but at least a bivalent radical, and alkenylphenoxyalkanes of the general formula (II)

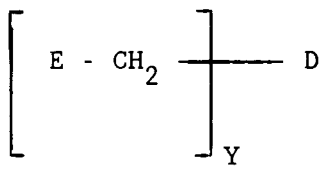

(II)

wherein D represents a Y-valent radical, Y is 1,2 or 3 and wherein E signifies a radical of the following formulae

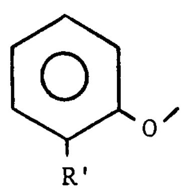

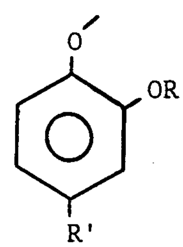

wherein R represents an alkyl group with 1 to 6 carbon atoms and R' a 1,2 or 2,3 alkenyl group with 3 to 8 carbon atoms.

Polyimides of the general formula (I) can be utilized in many ways as starting materials for the preparation of polymerization and polyaddition products. In the French patent specification 1,555,564, the polyaddition of N,N[1]-bismaleic imides with primary diamines and their thermal curing are described. In the German patent specification 2 754 632.C2, amino acid hydrazides are pre-reacted with N,N[1]-bismaleic imides and subsequently thermally cured. The cross-linked polyimides obtained in accordance with the said patent specifications show the disadvantages of many highly cross-linked duromer resins; in particular, they are very brittle.

In the German "Offenlegungsschrift" 2 627 045, a process is described for the preparation of cross-linked polymers exhibiting imide groups by reacting polyimides of the type of the N,N[1]-bismaleic imides with alkenylphenols and/or alkenylphenol ethers, optionally in the presence of polymerization catalysts. o,o'Diallylbisphenol-A, 4,4'-hydroxy-3,3'-allyldiphenyl, bis(4-hydroxy-3-allylphenyl)methane, 2,2'-bis(4-hydroxyl-3,5-diallylphenyl)propane and eugenol are stated as examples of utilizable alkenylphenols.

In said patent specification, reaction products from 4,4'-bismaleic imidodiphenylmethane and o,o'-diallylbisphenol-A are described as preferred embodiments.

The mixtures of N,N'-bismaleic imides and o,o-diallylbisphenols obtained in accordance with said patent specification are, in the uncured state, very highly viscous masses which exhibit inadequate processing properties for the filament winding process and the resin injection process for the preparation of fibre composites.

The problem to be solved by the present invention was to produce curable resins exhibiting imide groups which remain both tough and temperature-resistant after polymerization and which do not have the drawback of poor processability into fibre composites via wet processes such as the filament winding process and the resin injection process. This problem is solved by the claimed compositions. It was further discovered that the processing properties of the curable resins containing imide groups in accordance with the invention may be further improved if polyimide mixtures from two-ring and single-ring N,N'-bismaleic imides are employed. As a preferred embodiment, a mixture of 4,4'-bismaleic imidodiphenylmethane and bismaleic imidotoluene is used.

It was further discovered that the quantative ratio of ingredients of polyimide to alkenylphenoxyalkane may be varied within wide limits, but that preferably 0.2 - 1.0 equivalents alkenylphenoxyalkane are used per equivalent of polyimide.

For the polyimides of the general formula (I) that can be used within the scope of the invention

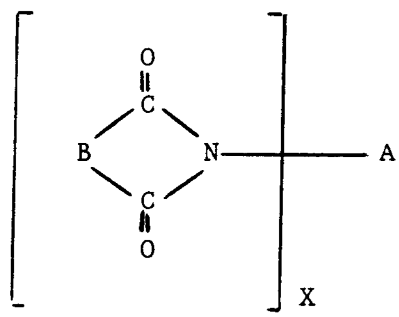

(I)

B represents a bivalent organic radical which contains an ethylenic double bond. The following structures for radical B are possible:

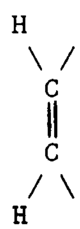 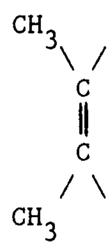 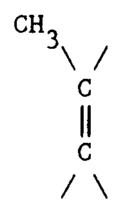 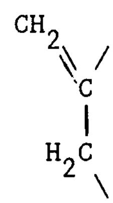

The radical designated A in the general formula (I) may be an X-valent radical, but at least a bivalent radical such as an alkylene group with up to 12 carbon atoms, a cycloalkenyl group with 5 to 6 carbon atoms, a heterocyclic group with 4 to 5 carbon atoms and at least one nitrogen, oxygen or sulphur atom in the ring, a mono- or dicarbocyclic group or at least two mono- or dicarbocyclic aromatic or cycloalkenyl groups, which are connected to each other by means of a direct carbon-carbon bond, or by means of a bivalent radical, i.e. oxygen, sulphur or an alkylene group with one to three carbon atoms, or one of the groups expressed below as formulae, i.e.

$$-N=N-$$

$$-\underset{\underset{O}{\|}}{N}=N-$$

$$-NR^1-$$

$$-P(O)R^2-$$

$$-\overset{\overset{O}{\|}}{C}-O-$$

$$-SO_2-$$

$$-\underset{\underset{R^3}{|}}{\overset{\overset{R^1}{|}}{Si}}-$$

$$-\overset{\overset{O}{\|}}{C}-NH-$$

$$-\overset{\overset{R^4}{|}}{N}-\overset{\overset{O}{\|}}{C}-R^5-\overset{\overset{O}{\|}}{C}-\overset{\overset{R^5}{|}}{N}-$$

$$-O-\overset{\overset{O}{\|}}{C}-R^5-\overset{\overset{O}{\|}}{C}-O-$$

wherein the radicals $R_1$, $R_2$, $R_3$, $R_4$, $R_5$ are alkenyl groups with one to five carbon atoms.

Examples of bisimides for the preparation of the novel imide resins are 1,2-bismaleic imidoethane, 1,6-bismaleic imidohexane, 1,12-bismaleic imidododecane, 1,6-bismaleic imido(2,2,4-trimethyl) hexane, 1,3-bismaleic imidobenzene, 1,4-bismaleic imidobenzene, 4,4'-bismaleic imidodiphenylmethane, 4,4'-bismaleic imidodiphenyl ether, 4,4'-bismaleic imidodiphenylsulphone, 4,4'-bismaleic imidodicyclohexylmethane, 2,4-bismaleic imidotoluene, 2,6-bismaleic imidotoluene, N,N'-m-xylylene bismaleic imide, N,N'-p-xylylene bismaleic imide, N,N'-m-phenylene bis-citraconic imide, N,N'-4,4'-diphenylcitraconic imide, N,N'-4,4'-diphenylmethane-bis-itaconic imide.

Higher-molecular bisimides of the general formula (III)

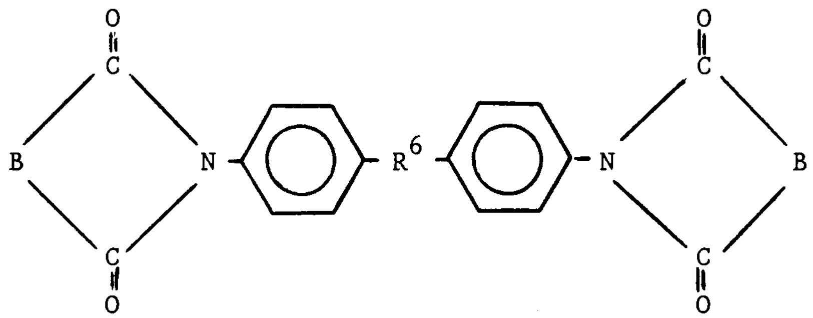

(III)

may also be employed, wherein $R_6$ represents a bivalent radical of the groups expressed below as formulae such as

-$CH_2$-, 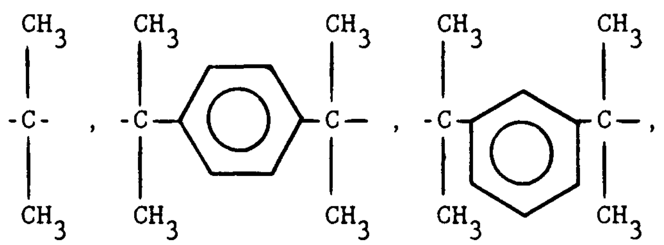 , $SO_2$, SO, CO, -O-

or

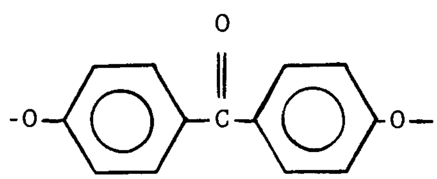

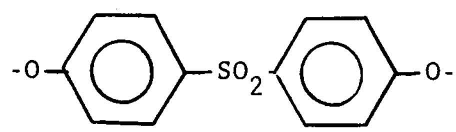

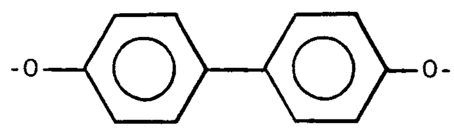

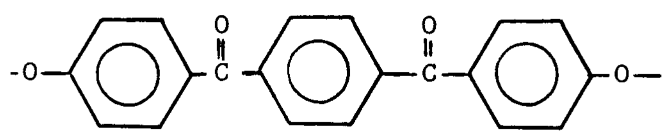

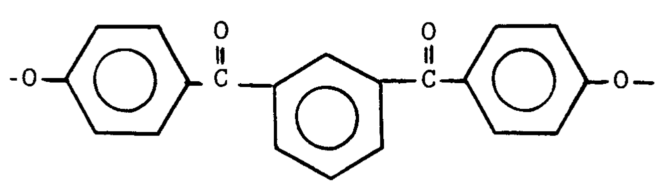

Mixtures of two or more of the aforementioned bisimides may also be employed for the preparation of imide resins in accordance with the invention.

Preferred bisimides are those which yield low-melting eutectic mixtures, e.g. mixtures of 2,4-bismaleic imidotoluene and 4,4'-bismaleic imidodiphenylmethane or 2,4-bismaleic imidoanisole and 4,4'-bismaleic imidodiphenylmethane or 2,4-bismaleic imidotoluene, 4,4'-bismaleic imidodiphenylmethane and 2,2,4-trimethylhexamethylene bismaleic imide. For the preparation of the polyimide compositions in accordance

with the invention, mixtures of the aforementioned eutectic bisimides with higher-molecular bisimides of the general formula (III) can likewise be employed.

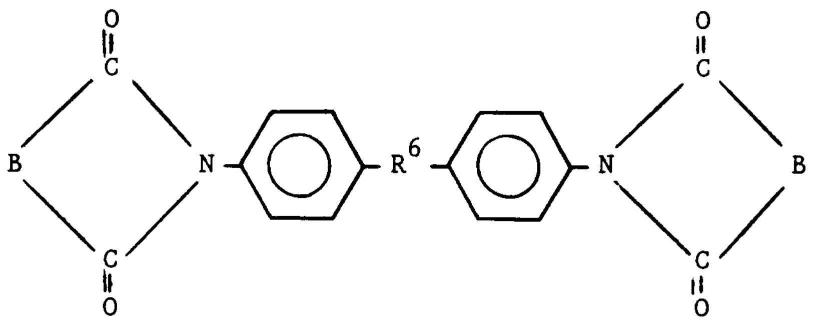

(III)

The bisimides of the general formulae (I) and (III) can also be modified with polyamines, polyhydrazides, amino-acid hydrazides, azomethines, polyisocyanates, polycyanates and other polyfunctional monomers co-reactive with bismaleic imides. Reactive elastomers, such as aryl- or vinyl-terminated butadienes/acrylonitrile co-polymers or carboxy group terminated acrylonitrile butadiene rubbers and butadiene rubbers can also be employed for further modification of the mixtures in accordance with the invention.

The compositions of the invention can by incorporating be modified thermoplastic polymers such as polyether sulphone, polysulphone, polycarbonate, polyhydantoin, polyether imide, polyimide, polyamide imide, polyether ketones, polyetherether ketones, polyesters, polyamides and aromatic polyesters.

The preparation of the novel alkenylphenoxyalkanes of the general formula (II) is accomplished by reacting 2-allylphenol sodium with $\alpha,\omega$-dihaloalkanes, preferably $\alpha,\omega$-dibromoalkanes in a neutral solvent, e.g. in higher-boiling ethers or aprotic solvents such as dimethyl formamide, dimethyl acetamide or dimethyl sulphoxide.

As a preferred embodiment, the sodium salt of 2-allylphenol is prepared by reaction with sodium methylate solution and subsequently reacted with the corresponding $\alpha$,x-dibromo compound in methanol.

The alkenylphenoxyalkanes of the general formula (II) are novel and their preparation and properties have not been previously described in the literature. In these compounds, Y is preferably 2, R preferably methyl and R' preferably 1,2 or 2,3-propenyl. The radical D is preferably a bivalent organic radical, selected from an alkylene group with up to 10 carbon atoms, a cycloalkylene group with 5 to 6 carbon atoms or a p- or m-phenylene group.

The preparation of the curable composition in accordance with the invention is accomplished in accordance with the known techniques for mixing melts, solutions and powders of the reactants. If further processing of the curable compositions is carried out by means of the prepreg process, the reactants in the melt are homogeneously mixed, optionally in the presence of an auxiliary solvent, and the resulting melt or solution is used to impregnate fibres, woven fabrics, bonded-fibre fabrics and other reinforcing fibres. The preparation of mixtures of the curable compositions in accordance with the invention may also be accomplished in the presence of heat, preferably at temperatures between 80 and 200 °C, with pre-polymers being obtained which, depending on the duration of said thermal pre-polymerization, still yield in organic solvents products which are soluble or meltable, or at least mouldable.

For the preparation of imide resins in accordance with the invention, mixtures may also be employed consisting of two or more of the aforementioned alkenylphenoxyalkanes. Good results are also obtained in accordance with the invention by the use of mixtures of one or more alkenylphenoxyalkanes in accordance with the invention with the single-ring and two-ring alkenylphenols, described in the German "Offenlegungschrift" 2 627 045, of the general formula (V)

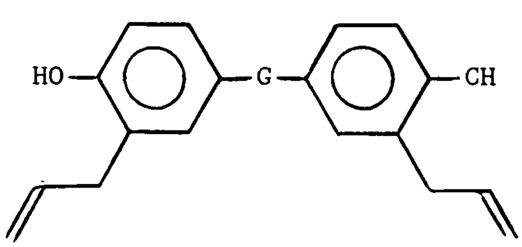

(V)

wherein G represents one of the radicals

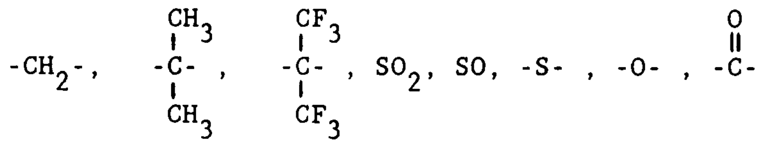

or

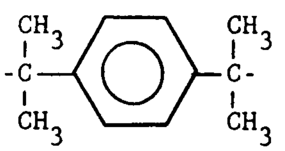 , 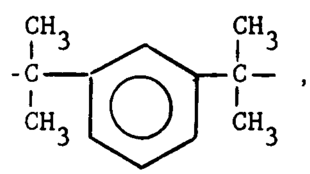 , 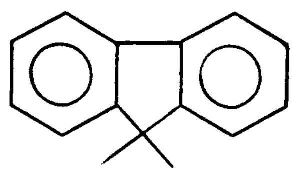

As a preferred embodiment, the alkenylphenoxyalkanes are employed in a mixture with o,o'-diallylbisphenol-A for preparation of the imide resins in accordance with the invention.

As a further preferred embodiment, one or more of the alkenylphenoxyalkanes in accordance with the invention are employed together with the alkenyl compounds, described in the European patent application 230741 A 2, of the formula (IV)

$$[\ I\ ]_m\!-\!K \qquad \text{(IV)}$$

wherein K signifies an m-valent organic radical and I a phenyl ring which is substituted with at least one alkenyl group (e.g. allyl or 1-propenyl). Preferred alkenyl compounds of the general formula IV are 4,4'-bis-[o-(1 propenyl)phenoxy]diphenylsulphone, 4,4'-bis[o-(1 propenyl)phenoxy]benzophenone and o-allylphenol/4,4'bisglycidylbisphenol A - addition compound.

In many industrial applications of curable resins in accordance with the invention, polymerization catalysts may be employed. They should be present in the reaction mixture in a concentration of 0.01 to 10%wt, preferably in a concentration of 0.05 to 5%wt, in relation to the total amount of reacting components.

Amongst the ionic catalysts, particularly suitable in accordance with the invention are tertiary, secondary and primary amines or amines which contain several different amino groups (e.g. composite tertiary/secondary amines) and quaternary ammonium compounds. These amine catalysts may be both monoamines and polyamines. If primary and secondary amines are used, monoamines are preferable. The following substances are examples of such amine catalysts:
diethylamine, tributylamine, triethylamine, triamylamine, benzylamine, tetramethyldiaminodiphenylmethane, N,N'-diisobutylaminoacetonitrile, N,N'-dibutylaminoacetonitrile, heterocyclic bases, such as chinoline, N-methylpyrrolidone, imidazole, benzimidazole and their homologues, and also mercaptobenzothiazole. Suitable quaternary ammonium compounds are for example benzyltrimethylammonium hydroxide and benzyltrimethyl ammonium methoxide.

Further suitable ionic catalysts are alkali metal compounds, such as alkali alcoholates and hydroxides. Sodium methylate is particularly suitable.

Suitable radical polymerization catalysts are the known organic peroxides and hydroperoxides as well as azoisobutyronitrile. The preferred concentration is in this case also 0.1 to 5.0%wt.

Further polymerization catalysts which can be used for the process in accordance with the invention are acetyl acetonates, particularly the acetyl acetonates of transition metals.

The processing of curable polyimides in accordance with the invention into cross-linked (cured) products, optionally in the presence of a curing catalyst, is carried out by heating to temperatures of 60 to 260 °C, preferably 100 to 250 °C. As a rule, curing is accomplished with simultaneous shaping into shaped

parts, flats, laminates, adhesive-bonded elements, etc.

The curing of polyimides in accordance with the invention is accomplished, as a rule, with simultaneous shaping into into shaped parts, flats, laminates, adhesive-bonded elements and foamed materials. In so doing, additives commonly used in curable plastics technology, such as fillers, plasticizers, pigments, dyes, mould separating agents and flame-retardent materials, may be added to the curable masses. Examples of substances which may be used as fillers are glass fibres, mica, graphite, quartz powder, kaolin, colloidal silicon dioxide or metal powders, and which may serve as mould separating agents are silicon oil, various waxes, zinc or calcium stearate etc.

Moulding may, however, also be carried out by means of a press by the hot-press method. Usually it is sufficient to heat for a short period to temperatures from 170 to 250 °C at a pressure from 1 to 200 kgf/$cm^2$ and to cure the moulded part obtained in this manner outside the press.

The polyimide resins in accordance with the invention are particularly applicable in the fields of casting, surface protection, electrical engineering, lamination, adhesives and foam manufacture and in the building industry.

Processing of curable polyimide resins in accordance with the invention may be carried out by casting. For some applications, it is necessary for the processing viscosity to be particularly low. In such cases, it is possible to add reactive thinners, preferably ones which are liquid at room temperature, to the polyimide resins.

Employable reactive thinners contain one or more polymerizable double bonds of the general formula

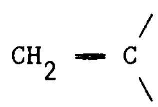

Employable monomers may be esters, ethers, hydrocarbons, substituted heterocyclic compounds or organometallic or organometalloid compounds.

The esters include allyl, methallyl, crotyl, isopropenyl and cinnamyl esters which are derived from saturated or unsaturated aliphatic or aromatic mono- or polycarboxylic acids, such as acetic acid, propionic acid, butyric acid, oxalic acid, malonic acid, succinic acid, adipic acid, sebacic acid, acrylic acid, methacrylic acid, phenylacrylic acid, crotonic acid, maleic acid, fumaric acid, citraconic acid, tetrahydrophthalic acid, itaconic acid, acetylene dicarboxylic acid, benzoic acid, phenylacetic acid, p-phthalic acid, terephthalic acid, isophthalic acid and trimellitic acid, and esters of unsaturated carboxylic acids with non-polymerizable alcohols, such as benzyl, isopropyl and 2-ethylhexyl ester.

Typical examples of esters are:
allyl acetate
methyl acrylate and methacrylate
vinyl methacrylate
allyl maleate
allyl fumarate, allyl phthalate, allyl malonate
triallyl trimellitate.
Usable ethers include:
vinyl allyl ether, diallyl ether
dimethylallyl ether and allyl crotyl ether.
Possible substituted heterocyclic compounds are:
vinylpyridine, N-vinylpyrrolidone,
N-vinylcarbazole, allyl isocyanurate,
allyl cyanurate, vinyltetrahydrofurane,
vinylbenzofurane,
allyloxy tetrahydrofurane and
N-allylcaprolactam.
Furthermore, hydrocarbons may be employed, such as:
styrene, $\alpha$-methylstyrene, p-chlorostyrene,
divinylbenzene, diallylbenzene or
vinyltoluene.

Amongst the monomeric organometallic and organometalloid derivates, mention may be made, in particular, of those which contain one or more phosphorus, boron or silicon atoms. These may be silanes and siloxanes, phosphines, phosphinic oxides or sulphides, phosphates, phosphites, phosphonates,

boranes, orthoborates, boronates, borozoles and phosphazenes. Examples that may be mentioned are 1,3-diallyltetramethyldisiloxane, phenyldimethylallylsilane, allyldimethylphosphinic oxide, allyl orthophosphate, allylmethyl phosphonate, triallyl borazole, triallyl boroxole and triallyl tri-chlorophosphazene.

Furthermore, monomers of the various aforementioned categories may contain halogen atoms, particularly chlorine or fluorine, or functional groups, such as an alcoholic or phenolic hydroxyl group, an aldehyde or ketone carbonyl group, an amido group, an epoxy group or a cyano group.

As examples of polymerizable monomers which contain such substituents, mention may be made of allyloxyethanol, p-allyloxyphenol, tetrallylepoxyethane, glycidyl acrylate, ally glycidyl ether, p-cyanostyrene, acrylamide, N-methylacrylamide, N-methylolacrylamide, methylacrylnitrile, p-chlorostyrene, p-fluorostyrene and $\beta$-hydroxyethyldiallyl cyanurate.

The curable mixtures in accordance with the invention may also be cured in two stages. After the bisimide has been mixed with the selected alkenylphenoxyalkane, the mixture is heated for a limited period of time to a temperature between 120 and 170 °C. A pre-polymer is so formed which is still thermally mouldable and optionally still soluble in organic solvents.

The pre-polymer may be ground to a powder before accomplishing the final curing process, optionally after addition of powdered fillers such as quartz powder, aluminium oxide, carbon powder, etc.

The preparation of pre-polymers may also be accomplished by heating a solution or suspension of the starting materials (bisimide + alkenylphenoxyalkane).

In the following examples, typical curable mixtures of polyimides and alkenylphenoxyalkanes are described and a number of mechanical properties measured. Modifications, multiplication ad libitum of the starting amounts and the corresponding adaptation of technical apparatus can be readily accomplished.

## EXAMPLE 1

### Synthesis of 1,3-bis(o-allylphenoxy)propane

140.7 g o-allylphenol (1.05 mol) and 189 g (1.05 mol) of a 30% solution of sodium methylate in methanol are stirred in a 3-necked flask equipped with a reflux condenser, droplet funnel and thermometer for 60 minutes at 60 to 70 °C.

101 g (0.5 mol) 1,3-dibromopropane are added dropwise and the mixture heated for 12 to 15 hours to reflux. Subsequently, it is cooled down to room temperature and washed with 100 ml toluene. 100 ml toluene and 200 ml water are added to the filtrate, the phases are separated and the toluene phase is washed to the neutral state with distilled water. The toluene is then distilled off and the residue (142.6 g) distilled in vacuo.

The main fraction distils at 170 to 178 °C and 1 mbar.

| | |
|---|---|
| Yield: | 96.5 g 1,3-bis(o-allylphenoxy)propane. |
| Viscosity: | 45 mPa.s at 20 °C. |

## EXAMPLE 2

### General procedure for the preparation of $\alpha,\omega$-bis(o-allylphenoxy)alkane

700 ml dimethyl formamide and 2.1 mol sodium hydride are introduced into a stirring flask and chilled to a temperature of approx. 0 °C. Subsequently, 2.1 mol o-allylphenol is added dropwise over a period of 2 hours and then stirred at room temperature for 1 hour. 1 mol a,x-dibromoalkane is then added dropwise during chilling causing precipitation. The reaction mixture is then heated to 100 °C and stirred for 14.5 hours at 100 °C. After cooling to room temperature, the precipitate is drawn off and washed with 2 x 200 ml toluene. The dimethyl formamide solution, which contains 400 ml washing toluene, is poured onto 1.5 litre of ice water;

subsequently the toluene phase separated and the aqueous phase is extracted with 2 x 250 ml toluene again. The mingled toluene extracts are washed 3 times with 250 ml distilled water each time. The toluene phase is then reduced to a residue and the residue is worked up by distillation or crystallization.

The following $\alpha,\omega$-bis(o-allylphenoxy)alkanes were prepared according to this process.

| | |
|---|---|
| 1,3-bis(o-allylphenoxy)propane: | viscosity 45 mPa.s at 20 °C. |
| 1,4-bis(o-allylphenoxy)butane: | melting point 33 - 36 °C |
| 1,5-bis(o-allylphenoxy)pentane: | viscosity 31 mPa.s at 20 °C. |
| 1,6-bis(o-allylphenoxy)hexane: | melting point 41 - 44 °C |
| 1,10-bis(o-allylphenoxy)decane: | viscosity 43 mPa.s at 20 °C. |

| | |
|---|---|
| α,α'-bis(o-allylphenoxy)p-xylene: | melting point 53 - 54 °C. |
| α,α'-bis (o-allylphenoxy) m-xylene: | viscosity 120 mPa.s at 20 °C. |

EXAMPLE 3

Preparation of α,ω-bis(p-allylphenoxy-o-methoxy)alkanes

1.05 mol eugenol and 250 ml dimethyl formamide are introduced into a stirring flask and 189 g (1.05 mol) of a 30% sodium methylate solution are added dropwise. The mixture is subsequently heated to 60 °C and stirred continuously for 1 hour.
a,x-Dibromoalkane (0.5 mol) is added dropwise during stirring and subsequently the mixture is heated to 100 °C, 120 ml methanol are distilled off, then the mixture is stirred for 14 hours at 100 °C. Cool to approx. 60 °C and add 200 ml water and 400 ml toluene and, after cooling, separate the phases in a separating funnel. Wash the aqueous phase 3 times with 150 ml toluene each time and wash the mingled toluene phases to the neutral state with water (5 times with 150 ml each time). Subsequently, the toluene phase is dried and reduced to a residue. The residue crystallizes out completely. The following products were prepared according to this process.

| | |
|---|---|
| 1,3-bis(2-methoxy, 4-allylphenoxy)propane: | melting point 78 - 79 °C. |
| 1,4-bis(2-methoxy, 4-allylphenoxy)butane: | melting point 94 - 99 °C. |
| 1,5-bis(2-methoxy, 4-allylphenoxy)pentane: | melting point 64 - 65 °C. |

EXAMPLE 4

Preparation of 1,5-bis(o-propenylphenoxy)pentane by isomerization of 1,5-bis(o-allylphenoxy)pentane

2 g KOH (85%) are dissolved in 20 ml methanol and 1,5-bis(o-propenyl phenoxy)pentane added. The mixture is heated while being stirred to 65 °C and methanol distilled off. Towards the end of the process, 20 ml toluene is added and the mixture is then heated to reflux for 2 hours; subsequently it is cooled to 50 °C and 50 ml water and 50 ml toluene are added, the phases are then separated, subsequently the toluene phase is acidified with a little hydrochloric acid, then the toluene phase is washed several times with water until neutral. Subsequently, toluene is drawn off in vacuo at a residue temperature of 130 °C. 9.5 g (95% of theoretical amount) of 1,5-bis(o-propenylphenoxy)pentane is obtained as a residue.

EXAMPLES 5-11

A bismaleic imide mixture consisting of 105 g 4,4'-bismaleic imidodiphenylmethane, 45 g 2,4-bismaleic imidotoluene and 123 g 1,3-bis (o-allylphenoxy)propane is melted using a rotary evaporator in a round flask at 140 °C, the melt is briefly degassed in vacuo and the melt is then poured into steel trays and cured under pressure (4 bar) for 3 hours at 190 °C. After removal from the mould, the resin sheets are stoved for 5 hours at 240 °C. The mixtures in examples 6 to 10 stated in Table I following were prepared in an analogous manner.

TABLE I

| Example | Composition: Parts BMI / Parts bisallyl-phenoxyalkane | | Properties: Kq ($KN \times m^2 \times m^{1/2}$) | EB (GPa) |
|---|---|---|---|---|
| 5 | 55 /45 | - 1,3-bisallylphenoxy propane | 705 | 4.036 |
| 6 | 68.3/31.7 | - 1,6-bisallylphenoxy hexane | 404 | 3.565 |
| 7 | 69.2/30.8 | - 1,5-bisallylphenoxy pentane | 383 | 3.796 |
| 8 | 67.6/32.4 | - 1,4-bisallylphenoxy butane | 420 | 3.806 |
| 9 | 68.5/31.5 | - 1,3-bisallylphenoxy propane | 520 | 4.001 |
| 10 | 65 /35 | - α,α'-bis (2-allylphenoxy) m-xylene | 625 | 4.211 |
| 11 | 65 /35 | - α,α'-bis (2-allylphenoxy) p-xylene | 650 | 4.200 |

Kq = critical stress intensity factor

EB = modulus of bending elasticity

EXAMPLES 12-15

4,4'-bis(o-propenylphenoxybenzophenone) and bis(o-allylphenoxy)propane are introduced into a round flask and melted down to form a homogeneous mixture in 5 minutes at an oil bath temperature of 100°C using a rotary evaporator. 4,4'-bismaleic imidodiphenylmethane is added and the mixture mixed to a homogeneous melt in 10 to 15 minutes at 160°C oil bath temperature. The melt is poured into a parallelepiped mould and cured at 4 bar for 3 hours at 190°C. After removal from the mould, stoving is performed for 5 hours at 240°C. The results are summarized in the following table.

TABLE II

| Example | Composition | | | Kq | EB |
|---|---|---|---|---|---|
| | Parts MDAB | Parts TM123 | Parts BOAP | (KN x $m^2$ x $m^{1/2}$) | (GPa) |
| 12 | 130 | 60 | 40 | 561 | 3,639 |
| 13 | 130 | 70 | 30 | 567 | 3,774 |
| 14 | 130 | 80 | 20 | 525 | 3,611 |
| 15 | 130 | 90 | 10 | 541 | 3,757 |

MDAB = 4,4'-bismaleic imidodiphenylmethane

TM123 = 4,4'-bis(o-propenylphenoxy)benzophenone

BOAP = 1,3-bis(o-allylphenoxy)propane

Kq = critical stress intensity factor

EB = modulus of bending elasticity

EXAMPLES 16-19

4,4'-bis(o-propenylphenoxy)benzophenone and 1,3-bis(o-allylphenoxy) propane are introduced into a round flask and melted to a homogeneous mixture in 5 minutes at an oil bath temperature of 100° C using a rotary evaporator, a mixture of bismaleic imides is added, consisting of 20 parts 2,2,4-trimethylhexamethylene bismaleic imide, 56 parts 4,4'-bismaleic imododiphenylmethane and 24 parts 2,4-bismaleic imidotoluene, and the mixture is mixed to form a homogeneous melt in 5 to 10 minutes at 140° C. The melt is poured into a parallelepiped mould and cured at 4 bar for 3 hours at 190° C, and then, after removal from the mould, stoved for 5 hours at 240° C. The properties of moulded materials of different compositions have been summarized in Table III below.

TABLE III

| Example | Composition | | | Kq | EB |
|---|---|---|---|---|---|
| | Parts BMI[1] | Parts TM123 | Parts BOAP | (KN x $m^2$ x $m^{1/2}$) | (GPa) |
| 16 | 130 | 60 | 40 | 559 | 3,946 |
| 17 | 130 | 70 | 30 | 580 | 3,671 |
| 18 | 130 | 80 | 20 | 634 | 3,775 |
| 19 | 130 | 90 | 10 | 450 | 3,845 |

[1]BMI = Compimide 353 of Technochemie GmbH

TM123 = 4,4'-bis(o-propenylphenoxy)benzophenone

BOAP = 1,3-bis(o-allylphenoxy)propane

EXAMPLES 20-23

o,o'-Diallylbisphenol A and 1,3-bis(o-allylphenoxy)propane are introduced into a round flask and melted to a homogeneous mixture in 5 minutes at an oil bath temperature of 100° C. COMPIMIDE 353 (a bismaleic imide resin of Technochemie GmbH - Verfahrenstechnik) is added and the mixture mixed to form a homogeneous melt in 5 to 10 minutes at 140° C. The melt is poured into a parallelepiped mould and cured at 4 bar for 3 hours at 190° C, then, after removal from the mould, stoved for 5 hours at 240° C. The properties of moulded materials of different compositions are summarized in Table IV below.

TABLE IV

| Example | Composition | | | Kq | EB |
|---|---|---|---|---|---|
| | Parts MDAB | Parts DABA | Parts BOAP | | |
| | | | | (KN x $m^2$ x $m^{1/2}$) | (GPa) |
| 20 | 130 T | 60 | 40 | 602 | 4,161 |
| 21 | 130 T | 70 | 30 | 634 | 4,644 |
| 22 | 130 T | 80 | 20 | 644 | 4,472 |
| 23 | 130 T | 90 | 10 | 684 | 4,509 |

MDAB = 4,4'-bismaleic imidophenylmethane

DABA = o,o'-diallylbisphenol A

BOAP = 1,3-bis(o-allylphenoxy)propane

## Claims

1. Curable compositions comprising:

   a) polyimides of the general formula (I)

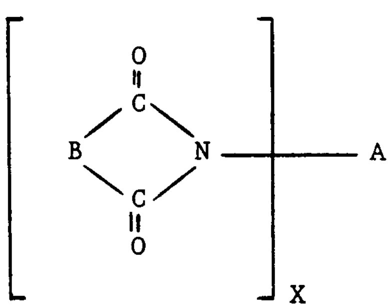

(I)

   wherein B signifies a bivalent radical containing a carbon-carbon double bond, and wherein A represents an X-valent radical, but at least a bivalent radical;

   b) alkenylphenoxyalkanes of the general formula (II)

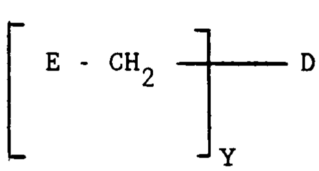

(II)

wherein D represents a Y-valent radical, Y is 1,2 or 3 and wherein E signifies a radical of the following formulae

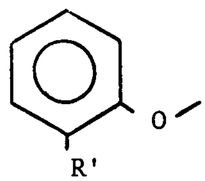

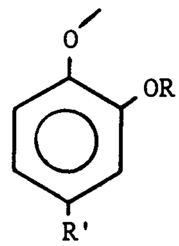

wherein R represents an alkyl group with 1 to 6 carbon atoms and R' a 1,2 or 2,3 alkenyl group with 3 to 8 carbon atoms.

**2.** Compositions as claimed in claim 1, characterized in that the components are contained in such a quantitative ratio that 0.05 to 20, preferably 0.2 to 1.0, mol alkenylphenoxyalkane is present per polyimide equivalent.

**3.** Compositions as claimed in claim 1 or 2, characterized in that the bivalent organic radical B of the general formula I signifies a radical of the following formulae

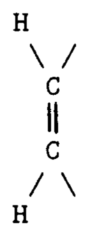

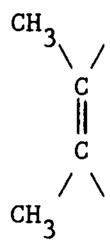

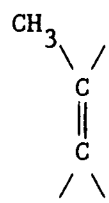

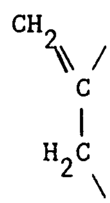

**4.** Compositions as claimed in claims 1 to 3, characterized in that the radical denoted A in the general formula (I) is an alkylene group with up to 12 carbon atoms, a cycloalkylene group with 5 to 6 carbon atoms, a heterocyclic group with 4 to 5 carbon atoms and at least one nitrogen, oxygen or sulphur atom in the ring, a mono- or dicarbocyclic group or at least two mono- or dicarbocyclic aromatic or cycloalkylene groups which are connected to each other by a direct carbon-carbon bond or by a bivalent group selected from oxygen, sulphur and alkylene with 1 to 3 carbon atoms, or is one of the groups expressed below as formulae, i.e.

$$-N=N-$$

$$-\underset{O}{\underset{\|}{N}}=N-$$

$$-NR^1-$$

$$-P(O)R^2-$$

$$-\overset{O}{\overset{\|}{C}}-O-$$

$$-SO_2-$$

$$-\underset{R^3}{\underset{|}{\overset{R^1}{\overset{|}{Si}}}}-$$

$$-\overset{O}{\overset{\|}{C}}-NH-$$

$$-\overset{R^4}{\overset{|}{N}}-\overset{O}{\overset{\|}{C}}-R^5-\overset{O}{\overset{\|}{C}}-\overset{R^5}{\overset{|}{N}}-$$

$$-O-\overset{O}{\overset{\|}{C}}-R^5-\overset{O}{\overset{\|}{C}}-O-$$

wherein the radicals $R^1$, $R^2$, $R^3$, $R^4$, $R^5$ are alkyl groups with one to five carbon atoms.

**5.** Compositions as claimed in claims 1 to 4, characterized in that a bisimide of the general formula (III) is employed as polyimide

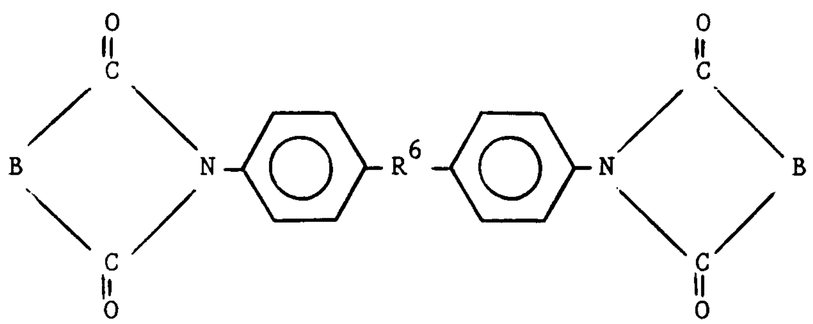

(III)

wherein $R^6$ represents a bivalent radical of the groups expressed below as formulae, such as

-$CH_2$-, 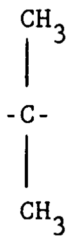 , 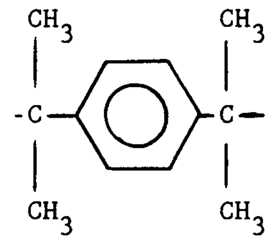 , 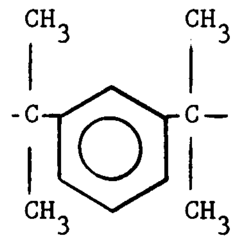 , $SO_2$, SO, CO, -O-

or

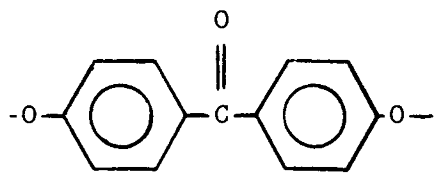 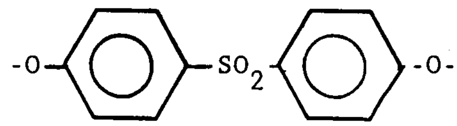

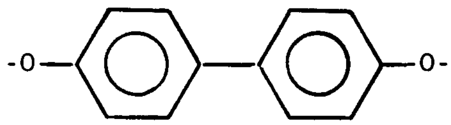

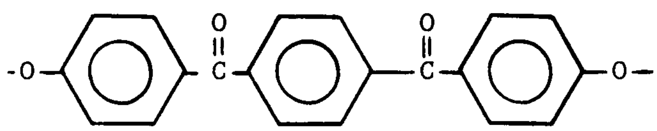

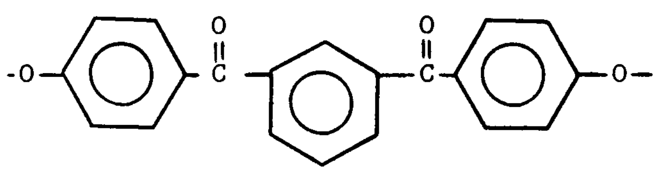

6. Compositions as claimed in any one of claims 1 to 5, characterized in that, in the compound of formula II, R is methyl.

7. Compositions as claimed in any one of claims 1 to 6, characterized in that, in the compound of formula II, R' is 1,2- or 2,3-propenyl.

8. Compositions as claimed in any one of claims 1 to 7, characterized in that, in the compound of formula II, the radical D represents a bivalent radical selected from an alkylene group with up to 12 carbon atoms, a cycloalkylene group with 5 to 6 carbon atoms, phenyl ring or a p- or m-phenylene group

9. Compositions as claimed in any one of claims 1 to 8, characterized in that they additionally contain a multi-ring compound of the formula V or VI

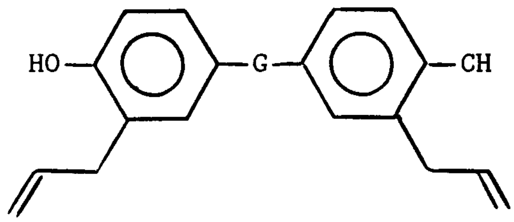

(V)

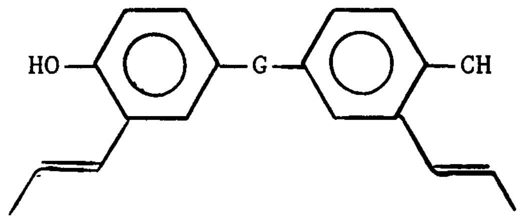

(VI)

wherein G represents one of the radicals

$-CH_2-$, 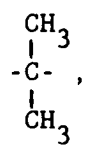 , 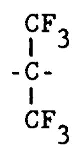 , $SO_2$, SO, -S- , -O- , 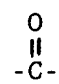

or

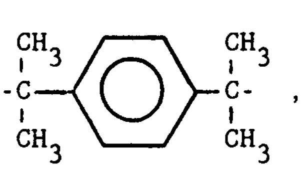 , 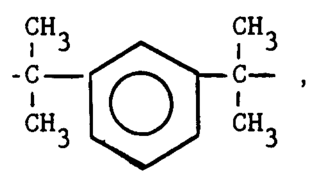 , 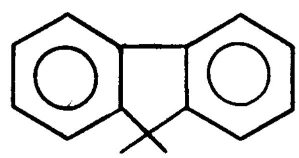

**10.** Process for the preparation of cross-linked polymers, characterized in that a composition as claimed in any one of claims 1 to 9 is cured by heating at temperatures from 60 to 260 °C, preferably 100 to 250 °C.

**11.** As novel compounds, alkenylphenoxyalkanes of the general formula (II)

$$\left[ E - CH_2 \right]_Y D \qquad (II)$$

wherein D, Y and E are as defined in claim 1.

European Patent Office

# EUROPEAN SEARCH REPORT

Application Number

**EP 91 20 1973**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | COMPOSITE POLYMERS, vol. 4, 1991, pages 39-52, RAPRA, Shawbury, GB; K.A. BARRETT et al.: "Injectable bismaleimide systems", & PAPER WAS FIRST PRESENTED AT 35TH INTERNATIONAL SAMPE SYMPOSIUM, 2nd - 5th April 1990 (Cat. O) | | C 08 G 73/12<br>C 08 F 222/40<br>C 07 C 43/215 |
| A | FR-A-2 316 267 (CIBA) & DE-A-2 627 045 (CIBA-GEIGY) (Cat. D) | | |
| A | EP-A-0 321 155 (AMOCO) | | |

| TECHNICAL FIELDS SEARCHED (Int. Cl.5) |
|---|
| C 08 G<br>C 08 F<br>C 07 C |

The present search report has been drawn up for all claims

| Place of search | Date of completion of search | Examiner |
|---|---|---|
| Den Haag | 06 November 91 | LEROY ALAIN |

CATEGORY OF CITED DOCUMENTS

- X: particularly relevant if taken alone
- Y: particularly relevant if combined with another document of the same catagory
- A: technological background
- O: non-written disclosure
- P: intermediate document
- T: theory or principle underlying the invention
- E: earlier patent document, but published on, or after the filing date
- D: document cited in the application
- L: document cited for other reasons
- &: member of the same patent family, corresponding document